Europäisches Patentamt

European Patent Office

Office européen des brevets

(11) Numéro de publication: **0 265 337**
**A1**

## (12) DEMANDE DE BREVET EUROPEEN

(21) Numéro de dépôt: **87402343.5**

(22) Date de dépôt: **20.10.87**

(51) Int. Cl.⁴: **F 16 L 59/02**

(30) Priorité: **24.10.86 FR 8614835**

(43) Date de publication de la demande:
**27.04.88  Bulletin  88/17**

(84) Etats contractants désignés: **DE FR GB IT NL**

(71) Demandeur: **BRONZAVIA-AIR EQUIPEMENT**
**270, avenue des Grésillons**
**F-92600 Asnieres  (FR)**

(72) Inventeur: **Joly, Claude**
**THOMSON-CSF SCPI 19, avenue de Messine**
**F-75008 Paris  (FR)**

(74) Mandataire: **Ruellan-Lemonnier, Brigitte et al**
**THOMSON-CSF SCPI 19, avenue de Messine**
**F-75008 Paris  (FR)**

(54) **Dispositif d'isolation thermique tel qu'une tuile de protection.**

(57)    L'invention est relative à un dispositif d'isolation thermique comportant au moins une couche de matériau isolant (9, 10, 11) enfermée dans un caisson métallique formé de deux parois (5, 8) principales et sensiblement parallèles entre elles et d'un rebord (1, 2, 3, 4) joignant ces deux parois et fermant le caisson.

Il est caractérisé en ce que le rebord est agencé pour que la distance entre les deux parois puisse varier, en réponse à une sollicitation extérieure.

Application: Isolation thermique dans des véhicules, et en particulier dans les aéronefs.

Coupe AA    **FIG_2**

EP 0 265 337 A1

## Description

### DISPOSITIF D'ISOLATION THERMIQUE TEL QU'UNE TUILE DE PROTECTION

L'invention concerne un dispositif d'isolation thermique tel qu'une coquille ou une cloison de calorifugeage, ou une paroi ou une tuile de protection, possédant un revêtement calorifuge intégré, et des moyens pour rattraper les tolérances de montage et les porblèmes de dilatation.

Des dispositifs d'isolation thermique sont utilisés dès lors qu'il est nécessaire d'isoler deux zones d'un système entre lesquelles doit subsister une différence élevée de température, soit pour des raisons de protection thermique, soit pour des raisons de rendement du système.

Les coquilles ou les cloisons sont des dispositifs rapportés au système, alors que les parois à revêtement calorifuge, en plus de la fonction d'isolation, font partie de la structure même et contribuent à la tenue mécanique de l'ensemble. Ces parois à revêtement calorifuge intégré procurent des avantages non négligeables, en matière de poids notamment, par rapport aux cloisons ou coquilles, ce qui est très appréciable en aéronautique par exemple, ou de façon plus générale dans n'importe quel type de véhicule.

Certains de ces dispositifs d'isolation thermique sont constitués à base d'au moins une couche de laine ou de tissu isolant enfermé dans un caisson métallique conférant une bonne rigidité à l'ensemble. Dans le cas où il existe plusieurs couches de laine ou de tissu, celles-ci peuvent être séparées par des écrans réflecteurs. Dans le cas d'une paroi à revêtement calorifuge intégré, ladite paroi fixée au système constitue l'une des parois du caisson, d'où le gain de poids.

Cependant ces dispositifs possèdent des inconvénients liés à leur épaisseur non négigeable qui peut être supérieure au centimètre, entraînant parfois des difficultés de mise en place dues au contact du dispositif avec d'autres éléments du système soit en raison de l'exiguïté des passages offerts au dispositif, soit en raison de tolérances dimensionnelles trop élevées dans l'environnement du dispositif ou sur le dispositif lui-même.

Egalement des contraintes sont parfois dues aux dilatations thermiques des éléments environnants lors du fonctionnement, qui peuvent entraîner une détérioration du dispositif, ou des fuites dues au fait que des écarts relatifs apparaissent par rapport à la pièce à calorifuger, qui entraînent une diminution de rendement.

L'invention a pour but de remédier à ces inconvénients.

Selon l'invention, un dispositif d'isolation thermique comportant au moins une couche de matériau isolant enfermée dans un caisson métallique formé de deux parois principales sensiblement parallèles entre elles et d'un rebord joignant ces deux parois et fermant le caisson, est caractérisé en ce que le rebord est agencé pour que la distance comprise entre les deux parois puisse varier en réponse à une sollicitation extérieure.

Selon une autre caractéristique, une partie au moins du rebord est souple, pour autoriser la variation d'épaisseur.

Un tel dispositif est donc particulièrement avantageux car il autorise des tolérances plus larges, lors de sa conception et de celle du système auquel il est destiné, étant donné que si des éléments extérieurs interfèrent lors de sa mise en place, lesdits éléments viennent alors exercer une pression contre l'une au moins des parois qui entraîne une réduction d'épaisseur sans entraîner de détérioration du dispositif ou des éléments environnants. Il en est de même en fonctionnement lorsque les contraintes sont dues à des dilatations.

Il est clair que la diminution d'épaisseur cessera lorsque le seuil de compression du matériau calorifuge contenu entre les deux parois aura été atteint. Lorsqu'il s'agit d'une mousse, ce seuil est élevé et en peut envisager une possibilité de réduction d'épaisseur pouvant aller jusqu'à cinquante pour cent au moins, le retour à la position de repos est assuré par l'élasticité du matériau lui-même.

Lorsque le matériau calorifuge est de l'air ou un fluide, le seuil est encore plus élevé. Cependant, dans ce cas, on prévoit des moyens pour ramener le dispositif en position d'origine.

D'autres caractéristiques et avantages de l'invention apparaîtront avec la description ci-après faite en regard des figures annexées sur lesquelles:
- la figure 1 est une vue de dessus d'un dispositif conforme à l'invention;
- la figure 2 est une vue en coupe AA de la figure 1;
- la figure 3 est une vue en coupe BB de la figure 1.

Sur ces différentes figures, on a représenté un dispositif d'isolation tel qu'une tuile d'isation destinée à être intégrée par exemple dans le conduit d'échappement d'un réacteur, entre une zone d'échappement de gaz chauds et une zone où peuvent se trouver des tubulures ou autres qu'il est nécessaire de protéger.

De plus, la tuile possède une forme particulière, de sorte qu'elle peut être intercalée entre deux ailettes situées dans ledit conduit.

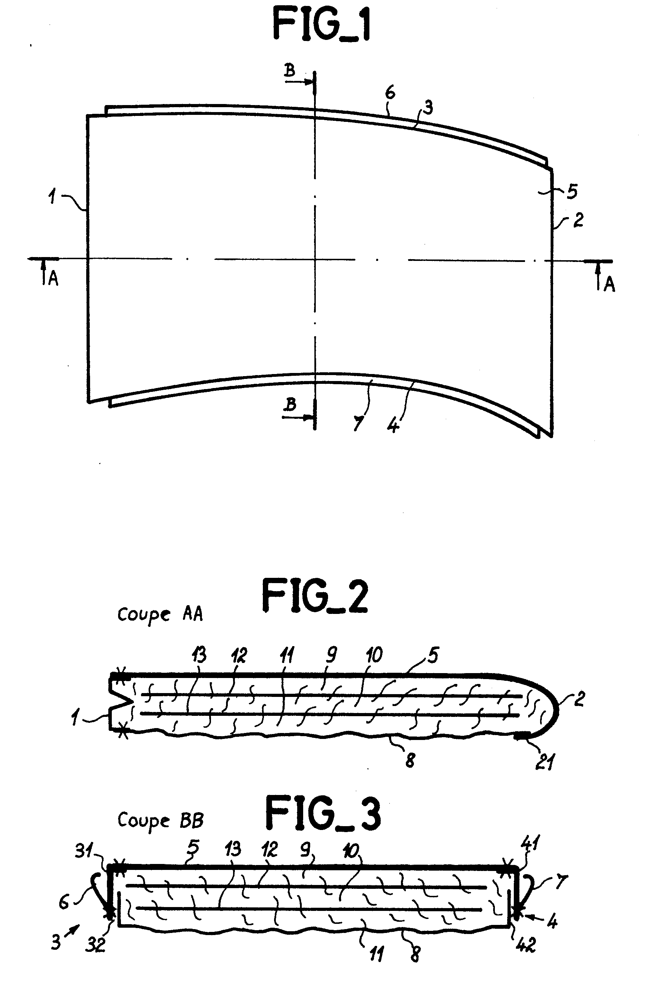

Dans ce but, comme le montre la figure 1, elle possède deux bords opposés 1, 2 sensiblement rectilignes et parallèles, et deux bords 3, 4 joignant chacun des deux premiers et ayant un profil tel qu'ils peuvent épouser la forme des ailettes entre lesquelles le dispositif doit être placé.

Dans l'exemple, une paroi 5 rigide limitée par les quatre bords est destinée à être en contact avec les gaz chauds, et la paroi opposée du dispositif, non visible sur la figure est destinée à se trouver du côté de la zone à préserver de la chaleur, et est mobile de façon à pouvoir se rapprocher de la paroi 5 lorsqu'une contrainte survient.

Il est bien entendu que cet exemple n'est nullement limitatif, et qu'au lieu de se trouver entre des ailettes d'un réacteur, le dispositif peut être placé sur tout autre endroit d'un système pour isoler thermiquement deux zones de ce système.

De préférence, afin d'assurer l'étanchéité et une

certaine continuité dans l'solation, les bords 3, 4 destinés à être au contact des ailettes ou des aubages sont pourvus d'un joint métallique 6, 7 souple déformable sous l'effet d'une pression dynamique par exemple, tel qu'une lamelle métallique profilée pour assurer cette fonction, comme expliqué ultérieurement, en regard de la figure 3.

Sur la figure 2, on a représenté une vue en coupe AA de la figure 1.

Sur cette figure 2, le rebord 2 possède un profil courbe et est réalisé dans le même bloc que la paroi 5. Dans une variante, ce rebord 2 est réalisé indépendamment de la paroi 5 et y est ensuite par exemple soudé ou fixé par tout autre moyen permettant une fixation étanche. Egalement, le profil courbe représenté dans l'exemple n'est pas obligatoire, ce rebord 2 pouvant être plan. Le profil représenté de ce rebord 2, dans le cas où le dispositif est destiné à être placé entre des ailettes ou des aubages est dicté dans l'exemple uniquement par des raisons liées à l'écoulement des gaz d'échappement.

Le côté du rebord 2 opposé à la paroi 5 est solidaire d'une partie 21 sensiblement parallèle à ladite paroi 5. Entre cette partie 21, ou méplat et ladite paroi 5 se trouve en regard, mais non fixée, l'extrémité d'un côté de la seconde paroi 8 du caisson, de sorte que lorsqu'une sollicitation extérieure survient, l'extrémité de la paroi 8 et le méplat s'éloignent relativement l'un de l'autre, la paroi 8 se rapprochant alors de la paroi 5. Cette réalisation implique que le rebord rigide 2 soit en dehors des zones à tolérances larges où des zones occupées par des organes pouvant se dilater. Le méplat 21 d'une part assure une fonction de butée à l'égard de la paroi 8 pour déterminer l'épaisseur maximale du dispositif et d'autre part empêche l'introduction de corps étrangers dans le dispositif.

Dans l'exemple, la paroi 5, le rebord 2 et le méplat 21 sont rigides, de façon que l'ensemble du dispositif soit suffisamment rigide, et la paroi 8 est souple.

Dans une variante, un côté de la paroi 8 différent du côté proche du rebord 2 est d'une part fixé au rebord 1 qui est constitué par un profilé souple et déformable, d'autre part fixé à la paroi 5 rigide de sorte que si une pression est exercée contre la paroi 8 souple, le profilé constituant le rebord I se déforme et la paroi 8 se rapproche alors de la paroi 5.

Le profilé est par exemple en forme de soufflet, ou de V, ou de toute autre forme permettant une fonction équivalente.

Entre les deux parois, se trouve un remplissage en matériau calorifuge souple tel que da la laine ou tout simplement de l'air. De préférence, le remplissage est constitué de plusieurs couches 9, 10, 11 superposées, parallèles aux parois 5, 8 et séparées par des écrans réflecteurs 12, 13.

Dans le cas où le remplissage est fluide, tel que de l'air, des moyens élastiques de rappel sont prévus, tels que des ressorts ou des lamelles pour ramener les deux parois dans leur position relative d'origine.

De préférence, et de façon connue en soi, la paroi 9 est renforcée par des gaufrages, comme le montrent les figures 2 et 3.

La figure 3, qui est une vue en coupe BB de la figure 1, permet de visualiser le mode de réalisation préféré des deux autres rebords 3 et 4 fermant le caisson sur les côtés destinés à être en contact avec les ailettes.

Chacun de ces rebords est respectivement constitué de deux éléments 31, 32; 41, 42 complémentaires l'un de l'autre, fixés l'un à la paroi 5 rigide, l'autre à la paroi 8 souple.

Chacun de ces éléments est par exemple un profilé en forme de L dont un côté du L est fixé de façon étanche à la paroi 5 ou 8 dont il est solidaire, par exemple par soudage. L'autre côté du profilé, non fixé à une paroi constitue un pan en regard et quasiment au contact du pan, non fixé à l'autre paroi, du profilé complémentaire, de sorte que ces deux pans non fixés puissent glisser relativement l'un le long de l'autre lorsque les deux parois 5, 8 ont un mouvement relatif l'une par rapport à l'autre. Le fait que ces deux parties de profilés soient en contact glissant assure une étranchéïté suffisante aux corps étrangers.

A la place des profilés, on envisage, dans une variante, de réaliser les pans en regard l'un de l'autre dans la même pièce que les parois 5 ou 8 dont ils sont solidaires, par un usinage ou pliage approprié.

Dans l'exemple, c'est la paroi 5 rigide qui est destinée à se trouver du côté de l'écoulement, c'est-à-dire due côté d'où sont susceptibles de venir des corps étrangers risquant de souiller le matériau calorifuge et de diminuer l'efficacité ou le rendement du dispositif. Afin d'éviter ces souillures, ce sont les profilés 31, 41 solidaires de ce côté 5 d'où risquent de venir les souillures qui sont placés le plus à l'extérieur, pour que l'ensemble constitué par ledit côté et les profilés associés soit mis à la façon d'un couvercle sur l'ensemble constitué par la paroi 8 mince et les profilés associés 32, 42.

Il est bien entendu que si les souillures sont susceptibles de venir du côté de la paroi souple, les profilés sont placés en conséquence. D'une façon générale, ce sont les profilés situés du côté d'où viennent les souillures qui chevauchent les autres par l'extérieur.

Egalement il est envisagé de réaliser tous les rebords de la même façon, soit à l'aide de profilés déformables, soit à l'aide de rebords rigides avec des méplats faisant office de butées à l'égard de la paroi mobile 8, ou de la façon dont il vient d'être décrit pour les rebords 3 et 4, c'est-à-dire avec deux éléments en contact glissant, un fixé à chaque paroi.

Dans une variante, on réalise chaque rebord d'une façon différente, conforme à l'un des modes de réalisation décrits.

Afin d'améliorer l'étanchéité entre les rebords 3, 4 et les ailettes ou aubages, ou d'une façon plus générale, avec les éléments en contact avec lesdits rebords, un joint 6, 7 est fixé respectivement sur la partie non soudée à la paroi 5 susceptible d'être en contact avec les souillures, de chaque profilé solidaire de cette paroi, comme le montre la figure 3.

Chaque joint est constitué par une lamelle métallique souple, non plane dont une partie est soudée sur toute la longueur du profilé 31, 41 correspondant, sur une zone dudit profilé éloignée de la paroi 5 à laquelle il est fixé, et dont une autre partie, située en regard d'une zone du profilé plus proche de ladite paroi 5, est écartée du profilé.

Ainsi, selon les sollicitations auxquelles sont soumis ces joints, leur partie écartée est plus ou moins comprimée, dans l'exemple par les ailettes et d'une façon plus générale par l'élément en contact, de sorte qu'une étanchéïté correcte est toujours assurée entre les deux faces du dispositif.

Dans un mode de réalisation, les joints ont une section sensiblement en forme de S, comme le montre la figure 3, et c'est un côté du S qui fixé au profilé correspondant.

Si nécessaire, des joints sont prévus également sur la partie rigide 2 du rebord, lorsqu'elle existe, et sur la partie I opposée à cette partie rigide.

Il est bien entendu que l'invention s'étend aux modes de réalisation équivalents, par exemple un mode de réalisation dans lequel, au lieu d'avoir une paroi souple et une paroi rigide, on a deux parois rigides si l'environnement le nécessite, en conservant bien entendu la possibilité de mouvement relatif entre les deux parois.

Bien entendu, les moyens de fixation de ce dispositif n'entrent pas dans le cadre de la présente invention. La fixation doit être adaptée aux conditions d'utilisation, mais elle est effectuée, de préférence, sur la partie rigide.

Un tel dispositif est donc particulièrement avantageux en raison des possibilités qu'il offre pour rattraper les tolérances ou pour supporter des contraintes dues aux dilatations des éléments voisins, et également car, dans le cas où il est pourvu de joints, il possède une étanchéïté quasi-parfaite aux impuretés, et de ce fait, sa durée de vie et son rendement s'en trouvent augmentés.

## Revendications

1. Dispositif d'isolation thermique comportant au moins une couche de matériau isolant (9, 10, 11) enfermée dans un caisson métallique formé de deux parois (5, 8) principales et sensiblement parallèles entre elles et d'un rebord (1, 2, 3, 4) joignant ces deux parois et fermant le caisson, caractérisé en ce que le rebord est agencé pour que la distance entre les deux parois puisse varier, en réponse à une sollicitation extérieure.

2. Dispositif selon la revendication 1, caractérisé en ce que le rebord est constitué de plusieurs parties (1, 2, 3, 4,) distinctes et en ce que l'une des parties au moins est constituée par un élément rigide (2) solidaire d'une première (5) des parois, élément dont le côté opposé à la paroi (5) est solidaire d'un méplat (21) parallèle à ladite paroi, et en ce qu'une extrémité d'un côté de la seconde paroi (8) est placée en regard de ce méplat, entre ledit méplat et la première paroi, de sorte que les deux parois peuvent se rapprocher l'une de l'autre lorsqu'une sollicitation extérieure survient.

3. Dispositif selon la revendication 1, charactérisé en ce que le rebord est constitué de plusieurs parties distinctes (1, 2, 3, 4) et en ce que l'une au moins des parties est constituée par un profilé déformable selon le principe d'un soufflet.

4. Dispositif selon la revendication 3, caractérisé en ce que la partie (1) déformable est dans un matériau profilé en forme de "V".

5. Dispositif selon la revendication 1, caractérisé en ce que le rebord est constitué de plusieurs parties distinctes (1, 2, 3, 4,), et en ce que l'une au moins des parties est constituée de deux éléments (31, 32; 41, 42) complémentaires, l'un solidaire de chaque paroi (5, 8), et comportant chacun un pan sensiblement perpendiculaire à chaque paroi (5, 8) en ce que lesdits pans sont en regard l'un de l'autre, quasiment en contact, de sorte que ces deux pans puissent glisser, relativement l'un le long de l'autre lorsque les deux parois (5, 8) sont en mouvement relatif.

6. Dispositif selon la revendication 5, charactérisé en ce que chaque élément (31, 32; 41, 42) est réalisé dans un profilé en forme de L, dont un côté de l'un (31, 41) est fixé a l'une (5) des parois, un côté de l'autre (32, 42) est fixé à l'autre (8) et dont les côtés libres de chaque constituent des pans en regard l'un de l'autre, quasiment en contact glissant.

7. Dispositif selon la revendication 5, caractérisé en ce que chaque pan en contact glissant est réalisé par un usinage et/ou pliage dans la même pièce que la paroi (5, 8) dont il est solidaire.

8. Dispositif selon la revendication 5, caractérisé en ce qu'un élément (31, 41) solidaire de la paroi (5) susceptible d'être en contact avec des souillures est fixé de façon que le pan correspondant à cet élément soit plus à l'extérieur du caisson que le pan de l'autre élément en regard solidaire de l'autre paroi (8).

9. Dispositif selon la revendication 1, caractérisé en ce qu'au moins l'une des parties (1, 2, 3, 4) du rebord est pourvue d'un joint (6, 7) métallique souple pour assurer l'étanchéïté entre ladite partie et une pièce adjacente.

10. Dispositif selon la revendication 9, caractérisé en ce qu'un joint (6, 7) est constitué par une lamelle métallique souple, non plane, fixée sur une zone du rebord éloignée de la paroi (5) susceptible d'être en contact avec les souillures, et dont la partie, en regard de la zone proche de ladite paroi, est écartée du rebord.

11. Dispositif selon la revendication 1, caractérisé en ce que l'une (5) des parois est rigide et l'autre (8) souple.

12. Dispositif selon la revendication 11, caractérisé en ce que la paroi souple (8) est renforcée par des gaufrages.

13. Dispositif selon les revendications 2 et 11, caractérisé en ce que la partie rigide (2) du rebord est réalisée dans le même bloc que la paroi (5) rigide par usinage.

14. Dispositif selon les revendications 2 et 11, caractérisé en ce que la partie rigide (2) du rebord est réalisée dans un élément fixé à la paroi (5) rigide.

15. Dispositif selon la revendication 1, caractérisé en ce que le matériau isolant est de l'air et en ce qu'il comporte des moyens de rappel pour premettre les parois dans leur position relative d'origine.

16. Dispositif selon la revendication 15, caractérisé en ce que les moyens de rappel sont des ressorts et/ou des lamelles élastiques disposés entre les deux parois.

17. Dispositif selon la revendication 1, caractérisé en ce que l'une (5) des parois est rigide et en ce qu'il comporte des moyens de fixation aux éléments environnants solidaires de ladite paroi.

18. Tuile de protection thermique, en particulier pour l'aéronautique, caractériseé en ce qu'elle constitue un dispositif selon l'une des revendications 1 à 17.

0265337

# FIG_1

B

6    3

1

5

A    A

2

B

7    4

# FIG_2

Coupe AA

13  12  11  9  10  5

1

2

8

21

# FIG_3

Coupe BB

31    5  13  12  9  10    41

6

7

3    32    11  8    42    4

Office européen
des brevets

**RAPPORT DE RECHERCHE EUROPEENNE**

Numero de la demande

EP 87 40 2343

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A- 831 523 (BRITISH REFRASIL CO. LTD) * Figures * | 1,2,6,9,10,12 | F 16 L 59/02 |
| A | US-A-4 318 965 (BLAIR) * Figures * --- | 15,16 | |
| A | GB-A- 839 249 (BRITISH REFRASIL CO. LTD) * Figures * ----- | 1,12 | |

| | | | DOMAINES TECHNIQUES RECHERCHES (Int. Cl.4) |
|---|---|---|---|
| | | | F 16 L<br>F 02 K |

Le présent rapport a été établi pour toutes les revendications

| Lieu de la recherche | Date d'achèvement de la recherche | Examinateur |
|---|---|---|
| LA HAYE | 22-12-1987 | BARTSCH A.W. |